Europäisches Patentamt

European Patent Office

Office européen des brevets

(19)

(11) Veröffentlichungsnummer: **0 236 291 B1**

# (12) EUROPÄISCHE PATENTSCHRIFT

(45) Veröffentlichungstag der Patentschrift:
17.04.91 Patentblatt 91/16

(51) Int. Cl.$^5$: **B60J 5/04**

(21) Anmeldenummer: **87890033.1**

(22) Anmeldetag: **20.02.87**

(54) **Rammschutzträger, insbesondere zur Verstärkung von Kraftfahrzeugtüren.**

Die Akte enthält technische Angaben, die nach dem Eingang der Anmeldung eingereicht wurden und die nicht in dieser Patentschrift enthalten sind.

(30) Priorität: **21.02.86 AT 456/86**

(43) Veröffentlichungstag der Anmeldung:
**09.09.87 Patentblatt 87/37**

(45) Bekanntmachung des Hinweises auf die Patenterteilung:
**17.04.91 Patentblatt 91/16**

(84) Benannte Vertragsstaaten:
**CH DE FR GB IT LI SE**

(56) Entgegenhaltungen:
**EP-A- 0 060 561**
**DE-A- 2 414 114**
**US-A- 3 964 208**

(73) Patentinhaber: **Austria Metall Aktiengesellschaft**
**A-5282 Braunau am Inn (AT)**

(72) Erfinder: **Laimighofer, Johann**
**Am Stadtbach 32**
**A-5280 Braunau am Inn (AT)**
Erfinder: **Meissner, Herbert, Dr.**
**Pfalzstrasse 8**
**A-5282 Braunau-Ranshofen (AT)**

(74) Vertreter: **Hain, Leonhard, Dipl.-Ing.**
**Tal 18/IV**
**W-8000 München 2 (DE)**

## Beschreibung

Die Erfindung betrifft einen Rammschutzträger, insbesondere zur Verstärkung von Kraftfahrzeugtüren, gemäß dem Oberbegriff dès Patentanspruches 1.

Kraftfahrzeugtüren werden in der Regel durch eingesetzte Träger oder Rohre gegen seitlichen Aufprall verstärkt. Bei einer bekannten Querverstärkung (DE-A-2 414 114) ist ein zum Türaußenwandblech hin offenes Trägerprofil mit dem Türaußenwandblech verbunden, wobei sein Innenraum mit Plastikmaterial ausgefüllt ist. Das Trägerprofil kann aus mehreren im Querschnitt gewellten oder abgewinkelten Profilierungen bestehen und seine Befestigung am Türaußenwandblech erfolgt entweder durch Schweißen oder mittels des eingebrachten Plastikmaterials. Diese bekannte Querverstärkung an Kraftfahrzeugtüren ist vor allem in der Tiefe platzsparend. Um aber eine ausreichende Wandverstärkung zu erreichen, sind mehrere Profilabschnitte nebeneinander an diesem Verstärkungsträger erforderlich, so daß seine Flächenausdehnung groß ist. Das Türwandblech kann daher keine Profilierungen oder Durchbrechungen aufweisen, weshalb dieser bekannte Verstärkungsträger in der Regel nicht an Türinnenwandblechen angebracht werden kann. Auch bei einem anderen Verstärkungsträger (US-A-3 964 208) sind mehrere nebeneinander verlaufende Profilierungen zur Verstärkung eines Türaußenwandbleches vorgesehen. Dieser bekannte Verstärkungsträger setzt sich im oberen Bereich über ein Verbindungsstück zu einer Türinnenwandblech-Verstärkung fort, so daß mit diesem recht aufwendigen und komplizierten Verstärkungsträger sowohl das Innen- als auch das Außenwandblech verstärkt werden kann.

Der Erfindung liegt demgegenüber die Aufgabe zugrunde, einen Rammschutzträger zu schaffen, der sich durch besonders große Steifigkeit auszeichnet und der dennoch einfach und raumsparend hergestellt werden kann.

Diese Aufgabe wird an einem Rammschutzträger nach dem Oberbegriff des Patentanspruches 1 durch die Kennzeichnungsmerkmale dieses Patentanspruches gelöst.

Vorteilhafte Weiterentwicklungen dieser Erfindung sind in Unteransprüchen erwähnt.

Der erfindungsgemäße Rammschutzträger aus einem Verbundträger bildet ein besonders steifes und stabiles Element, das sich wegen seiner geringen Trägertiefe und Trägerbreite sowohl an Außenwandblechen als auch an Innenwandblechen, die mit Profilierungen oder Durchbrechungen versehen sein können, anbringen läßt. Da dieser Verbundträger unmittelbar mit einem Türwandblech verbunden ist, wirkt dieses zusätzlich wie ein Gurtelement, verstärkt den anliegenden Gurt und damit auch den Verbundträger.

Die Erfindung wird nachfolgend anhand von Ausführungsbeispielen, die auch in der Zeichnung schematisiert dargestellt sind, näher beschrieben. Es zeigen :

Fig. 1 bis 3 Verbundträger im Querschnitt ohne Türwandblech,
Fig. 4 einen Verbundträger in Verbindung mit einem Türinnenwandblech und
Fig. 5 eine Draufsicht auf ein verkleinertes Türinnenwandblech.

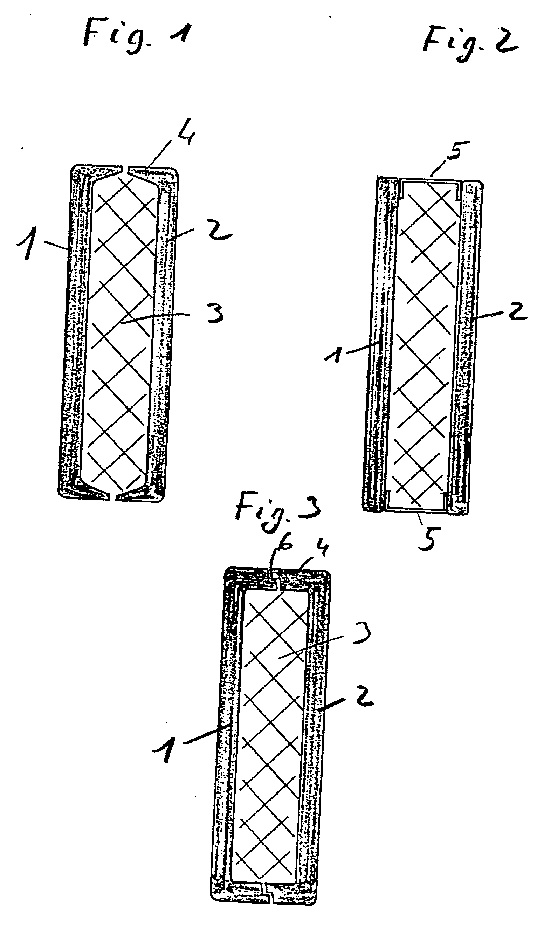

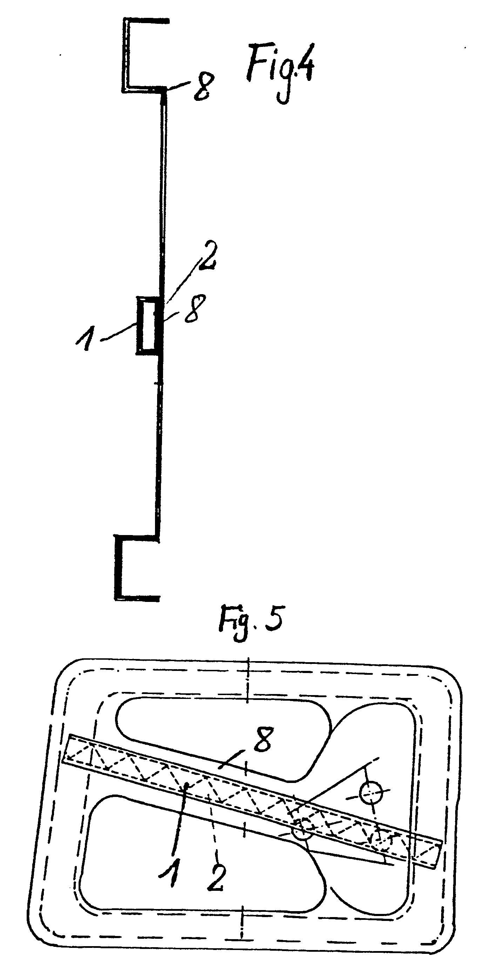

Wie die Fig. 1 bis 3 zeigen, besteht der Verbundträger aus den beiden Gurtelementen 1 und 2 aus Blech oder Strangpreßprofilen sowie einer Zwischenschicht 3 aus Kunststoff, die die beiden Gurtelemente miteinander verbindet. In Fig. 1 sind die Gurtelemente 1 und 2 U-förmig ausgebildet, wobei die U-Schenkel 4 nach innen gerichtet sind und so die Zwischenschicht einschließen. Während bei der Ausführungsform gemäß Fig. 1 diese U-Schenkel nicht aneinanderstoßen, bilden sie gemäß Fig. 3 eine Überlappung 6 und schließen so den Verbundträger auch randseitig ab. Bei der Ausführungsform gemäß Fig. 2 besorgen eigene U-Profile 5 an den Stirnseiten diesen Abschluß. Die Gurtelemente 1 oder 2 werden mit den Türwandblechen durch Kleben, Schweißen, Nieten od. dgl. so verbunden, daß eine Verbundwirkung gegeben ist.

In Fig. 4 ist ein Verbundträger gemäß den Fig. 1 bis 3 direkt mit einem Türinnenwandblech 8 durch Schweißen, Kleben oder Nieten verbunden. Dadurch entsteht ein Träger erhöhter Festigkeit, der auch gleichzeitig zur Befestigung von Fensterhebemechanismen oder Schloßteilen verwendet werden kann. Auch ist ein direkter Anschluß der Scharniere an die durch den Verbundträger verstärkten Türteile möglich.

Die Erfindung ist nicht auf die dargestellten Ausführungsbeispiele beschränkt, da als Zug- und Druckgurt neben Aluminiumstrangpreßprofilen und Aluminiumblechstreifen auch faserverstärkte Kunststoffe eingesetzt werden können, welche auch als Zwischenschichten denkbar sind. Auch Gußteile können, insbesondere als Montageplatten für Fensterhebesysteme, Schloßverstärkungen und Scharnierverstärkungen, als Zugband zwischen Schloß und Scharnierbändern verwendet werden. Als Türbandbleche sind sowohl Aluminium- als auch Stahlbleche verwendbar, da die Kunststoffzwischenschichten elektrolytische und Spaltkorrosionen ausschließen.

## Ansprüche

1. Rammschutzträger, insbesondere zur Verstärkung von Kraftfahrzeugtüren, mit einem mit einem Türwandblech (7, 8) verbundenen Verstärkungsträger, dadurch gekennzeichnet, daß der Verstärkungsträger aus einem Verbundträger aus mit Abstand voneinander getrennten Gurtelementen (1, 2) besteht.

2. Rammschutzträger nach Anspruch 1, dadurch gekennzeichnet, daß der Verbundträger zu seinem Randabschluß aus Gurtelementen (1, 2) mit U-förmigem Querschnitt und zueinander gerichteten Schenkeln (4) besteht.

3. Rammschutzträger nach Anspruch 1, dadurch gekennzeichnet, daß der Verbundträger zu seinem Randabschluß zwischen die Gurtelemente (1, 2) eingesetzte U-Profile (5) aufweist.

4. Rammschutzträger nach einem der Ansprüche 1 bis 3, dadurch gekennzeichnet, daß der Hohlraum zwischen den Gurtelementen (1, 2) des Verbundträgers mit Kunststoffmasse ausgefüllt ist.

5. Rammschutzträger nach einem der Ansprüche 1 bis 4, dadurch gekennzeichnet, daß der Verbundträger durch Kleben, Schweißen oder Nieten mit einem der Türwandbleche (7 bzw. 8) verbunden ist.

## Claims

1. A bumper support particularly for reinforcing motor vehicle doors, with a reinforcement support connected to a door wall panel (7, 8), characterised in that the reinforcement support consists of a composite support with spaced-apart belt elements (1, 2).

2. A bumper support according to Claim 1, characterised in that the composite support, for its peripheral closure, consists of belt elements (1, 2) of U-shaped cross-section and mutually facing arms (4).

3. A bumper support according to Claim 1, characterised in that the composite support has for its peripheral closure U-shaped profiles (5) which are inserted between the belt elements (1, 2).

4. A bumper support according to one of Claims 1 to 3, characterised in that the cavity between the belt elements (1, 2) of the composite support are filled with synthetic plastics composition.

5. A bumper support according to one of Claims 1 to 4, characterised in that the composite support is connected to one of the door wall panels (7) or (8) by adhesion, welding or riveting.

## Revendications

1. Poutre protectrice, destinée en particulier au renforcement de portières de véhicules automobiles, comportant une poutre de renforcement reliée à une tôle (7, 8) de paroi de portière, poutre caractérisée en ce que la poutre de renforcement est constituée par une poutre composite formée d'éléments nervurés (1, 2) séparés l'un de l'autre par un espace.

2. Poutre protectrice selon la revendication 1, caractérisée en ce que la poutre composite est constituée, en vue de la fermeture de ses bords, par des éléments nervurés (1, 2), comportant une section transversale en forme de U et des jambages (4) dirigés les uns vers les autres.

3. Poutre protectrice selon la revendication 1, caractérisée en ce que la poutre composite présente, en vue de la fermeture de ses bords, des profilés en U (5) mis en place entre les éléments nervurés (1, 2).

4. Poutre protectrice selon l'une des revendications 1 à 3, caractérisée en ce que l'espace creux, entre les éléments nervurés (1, 2) de la poutre composite, est rempli d'une masse de matière plastique.

5. Poutre protectrice selon l'une des revendications 1 à 4, caractérisée en ce que la poutre composite est reliée, à l'une des tôles (7 ou 8) de paroi de porte, par collage, soudure ou rivetage.

## Fig. 1

## Fig. 2

## Fig. 3

Fig.4

8

2

8

1

Fig. 5

8

1    2